# FASCICULE DE BREVET EUROPEEN

(11) **EP 2 088 809 B1**
(45) Date de publication et mention de la délivrance du brevet: **04.03.2015**
(21) Numéro de dépôt: 09151133.7
(22) Date de dépôt: 22.01.2009
(51) Int. Cl.: H04W 8/06

(54) **Procédé de fourniture prioritaire de ressources radio d'un réseau sans fil visité à un terminal itinérant, et centre de gestion d'appels associé**
Prioritäres Lieferverfahren von Funkressourcen eines drahtlosen Besuchernetzes an ein mobiles Endgerät und entsprechendes Anrufverwaltungszentrum
Priority method for supplying radio resources of a visited wireless network to a roaming terminal, and associated call management centre

(30) Priorité: 08.02.2008 FR 0850792
(43) Date de publication de la demande: 12.08.2009
(73) Titulaire: ALCATEL LUCENT, 92100 Boulogne-Billancourt (FR)
(72) Inventeur: Schmitt, Jean-François, 22304, LANNION (FR); Raynaud, René, 91620, NOZAY (FR)
(74) Mandataire: El Manouni, Josiane

(56) Documents cités:
- WO-A-2007/135236
- US-A1- 2004 198 357
- US-A1- 2007 002 868
- US-B1- 6 909 719

## Description

L'invention concerne les réseaux de communication sans fil, et plus précisément la fourniture de ressources radio d'un réseau de communication sans fil visité (ou « visited network ») à des terminaux de communication itinérants (et donc visiteurs) d'usagers qui sont rattachés à des réseaux de communication de domicile (ou « home networks »).

On entend ici par « réseau de communication sans fil » un réseau de type cellulaire (ou mobile), dit 3GPP, tel qu'un réseau de type GSM, GPRS/EDGE, UMTS ou CDMA (2000), ou un réseau local sans fil (standards VLAN (« Wireless Local Area Network » - IEEE 802.11a, Wi-Fi (802.11g). ETSI HiperLAN/2), et WiMAX (IEEE 802.16, ETSI HiperMAM)). D'une manière générale, l'invention concerne tout type de réseau sans fil dans lequel la gestion de l'accès radio prend en compte une priorité d'affectation des ressources radio au niveau des équipement qui affectent ces ressources.

Lorsqu'un usager itinérant (ou « roamer souhaité accéder à un (ou disposer de ressources radio d'un) réseau (de communication sans fil) visité, la probable que son souhait se réalise est souvent faible, voire très faible lorsque le réseau visité dispose d'une petite quantité de ressources radio et donc qu'il est souvent congestionné ou refuse d'offrir certains services. Il est celtes possible d'attribuer aux usagers des niveaux de priorité différents (par exemple ordinaire et « premium ») afin que ceux qui disposent d'un niveau de priorité élevé puissent accéder de façon prioritaire aux ressources radio d'un réseau sans fil. L'organisme international 3GPP a proposé une standardisation à cet effet dans son standard 3GPP 22.067 relatif aux paramètres dits d'eMLPP (« enhanced Multi Level Precedence and Preemption »).

Pour qu'un usager client d'un réseau sans fil de domicile puisse bénéficier de ressources radio de façon prioritaire, il faut que des données définissant son niveau de priorité aient été préalablement stockées dans ce que l'homme de l'art appelle le serveur de localisation de terminaux d'usagers clients (ou HLR (pour « Home Location Register »)) de son réseau sans fil de domicile, comme par example montré dans les documents US 6 909 719 B1 et WO 2007/135236.

Pour qu'un usager itinérant (et donc visiteur) puisse bénéficier de ressources radio d'un réseau sans fil visité de façon prioritaire, il faut que des données définissant son niveau de priorité aient été préalablement stockées dans ce que l'homme de l'art appelle le serveur de localisation de terminaux d'usagers visiteurs (ou VLR (pour « Visited Location Register »)) du réseau sans fil visité. Ces données doivent avoir été préalablement transmises au réseau visité par le HLR du réseau de domicile de l'usager itinérant.

On comprendra donc que si le HLR du réseau de domicile d'un usager itinérant n'a pas communiqué ou ne dispose pas de données définissant un niveau de priorité supérieur à un niveau ordinaire ou bien si ledit HLR communiqué des données définissant un niveau de priorité ordinaire, l'usager itinérant ne pourra pas bénéficier de façon prioritaire de ressources radio d'un réseau sans fil visité.

L'invention a donc pour but d'améliorer la situation.

Elle propose cet effet un procédé dédié à la fourniture (ou allocation) de ressources radio d'un réseau de communication sans fil visité (disposant d'un serveur de localisation de terminaux d'usagers visiteurs) à un terminal de communication itinérant (et donc visiteur) d'un usager rattaché à un réseau de communication de domicile.

Ce procédé se caractérise par le fait qu'il consiste, en cas de réception d'une demande de fourniture de ressources radio du réseau visité relative au terminal itinérant, à accéder au serveur de localisation de terminaux d'usagers visiteurs du réseau visité afin de déterminer si stocke des données représentatives d'un niveau de priorité de fourniture pour ce terminai itinérant, et en l'absence de telles données stockées ou en présence de données stockées représentatives d'un niveau de priorité de fourniture de type ordinaire (ou standard ou encore basique), à attribuer au terminal itinérant un niveau de priorité choisi, supérieur à un niveau de priorité ordinaire, de sorte que sa demande de fourniture de ressources radio soit traitée en fonction du niveau de priorité choisi attribué.

On entend ici par « demande de ressources radio » aussi bien une demande d'établissement d'une communication, qu'une demande de transfert inter-cellulaire (ou « handover »).

Le procédé selon l'invention peut comporter d'autres caractéristiques qui peuvent être prises séparément ou en combinaison, et notamment :
- en présence de données stockées représentatives d'un niveau de priorité de fourniture de type non ordinaire pour le terminal itinérant, on peut traiter la demande de fourniture de ressources radio en fonction de ce niveau de priorité qui est défini par les données stockées ;
- on peut analyser un premier identifiant associé au terminal itinérant et représentatif du pays où est implanté son réseau de domicile, et, en l'absence de données stockées représentatives d'un niveau de priorité de fourniture de ce terminal itinérant ou en présence de données stockées représentatives d'un niveau de priorité de fourniture de type ordinaire, on peut lui attribuer un niveau de priorité choisi, supérieur à un niveau de priorité ordinaire, si ce pays est différent du pays où est implanté le réseau visité ;
   ➢ on peut choisir le niveau de priorité à attribuer en fonction du pays où est implanté le réseau de domicile ;
- en variante ou zen complément, on peut analyser un second identifiant associé au terminal itinérant et représentatif de l'opérateur de son réseau de domicile, et en l'absence de données stockées représentatives d'un niveau de priorité de fourniture de ce terminal itinérant ou en présence de données stockées représentatives d'un niveau de priorité de fourniture de type ordinaire, on peut lui attribuer un niveau de priorité choisi, supérieur à un niveau de priorité ordinaire, si cet opérateur est différent de l'opérateur du réseau visité ;
   ➢ on peut choisir le niveau de priorité à attribuer en fonction de l'opérateur du réseau de domicile ;
- on peut par exempte transformer le niveau de priorité attribué en paramètres de type eMLPP (ou autre suivant la technologie d'accès utilisée, si elle est autre que 3GPP) destinés au réseau d'accès du réseau visité.

L'invention propose également un centre de gestion d'appels, destiné à faire partie d'un réseau de communication sans fil visité (disposant d'un serveur de localisation de terminaux d'usagers visiteurs), et comprenant des moyens de traitement chargés, en cas de réception d'une demande de fourniture de ressources radio du réseau visité relative à un terminal itinérant qui est rattaché à un réseau de communication de domicile, d'accéder au serveur de localisation de terminaux d'usagers visiteurs du réseau visité afin de déterminer si il stocke des données représentatives d'un niveau de priorité de fourniture pour ce terminal itinérant, et en l'absence de telles données stockées ou en présence de données stockées représentatives d'un niveau de priorité de fourniture de type ordinaire, d'attribuer à ce terminal itinérant un niveau de priorité choisi, supérieur à un niveau de priorité ordinaire, de sorte que sa demande de fourniture soit traitée en fonction du niveau de priorité choisi attribué,

Le centre de gestion d'appels selon l'invention peut comporter d'autres caractéristiques qui peuvent être prises séparément ou en combinaison, et notamment :
- ses moyens de traitement peuvent être chargés, en cas de détermination de données stockées représentatives d'un niveau de priorité de fourniture de type non ordinaire pour le terminal itinérant, de communiquer ces données stockées au réseau d'accès radio du réseau visité de sorte qu'il traite la demande de fourniture en fonction du niveau de priorité qui est défini par ces données stockées ;
- ses moyens de traitement peuvent être chargés d'analyser un premier identifiant associé au terminal itinérant et représentatif du pays ou est implanté son réseau de domicile, et, en l'abscence de données stockées représentatives d'un niveau de priorité de fourniture de ce terminal itinérant ou en présence de données stockées représentatives d'un niveau de priorité de fourniture de type ordinaire, de lui attribuer un niveau de priorité choisi, supérieur à un de priorité ordinaire, si ce pays est différent du pays où est implanté le réseau visité;
   ➢ ses moyens de traitement peuvent être chargés de choisir le niveau de priorité à attribuer en fonction du pays où est implanté le réseau de domicile;
- ses moyens de traitement peuvent être chargés d'analyser un second identifiant associé au terminal itinérant et représentatif de l'opérateur de son réseau de domicile, et en l'absence de données stockées représentatives d'un niveau de priorité de fourniture de ce terminal itinérant ou en présence de données stockées représentatives d'un niveau de priorité de fourniture de type ordinaire, de lui attribuer un niveau de priorité choisi, supérieur à un niveau de priorité ordinaire, si cet opérateur est différent de l'opérateur du réseau visite
   ses moyens de traitement peuvent être chargés de choisir le niveau de priorité à attribuer en fonction de l'opérateur du réseau de domicile ;
- ses moyens de traitement peuvent par exemple être chargés de transformer le niveau de priorité attribué en paramètres de type eMLPP (ou tous autres paramètres de gestion de priorité d'a Ho cation de ressources radio) destinés au réseau d'accès du réseau visité.

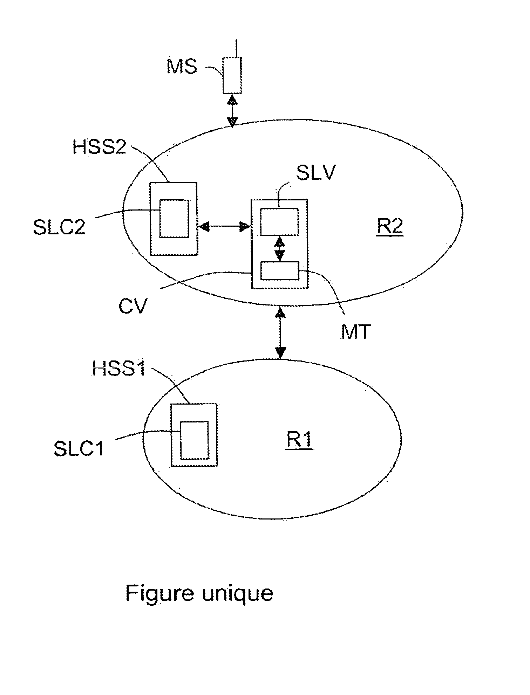

D'autres caractéristiques et avantages de l'invention apparaîtront à l'examen de la description détaxée ci-après, et du dessin annexé, sur lequel l'unique figure illustre de façon très schématique et fonctionnelle un réseau de communication de domicile couplé à un réseau de communication sans fil visité équipé d'un centre de gestion d'appels de visiteurs selon l'invention, Le dessin annexé pourra non seulement servir à compléter l'invention, mais aussi contribuer à sa définition, le cas échéant.

Invention a pour objet de permettre à un usager itinérant, rattaché à un réseau de communication de domicile, d'accéder prioritairement, avec son terminal sans fil, à un réseau de communication sans fil visité.

Dans ce qui suit, on considère à titre d'exemple non limitatif que le réseau de communication de domicile (R1) et le réseau de communication sans fil visité (R2) sont deux réseaux mobiles (ou cellulaires), par exempte de type UMTS. Mais, l'invention n'est pas limitée à cet exemple, Elle concerne en effet tous les réseaux dits 3GPP, comme par exemple les réseaux GSM, GPRS/EDGE et CDMA (2000), et les réseaux locaux sans fil (standards WLAN (« Wireless Local Area Network » - IEEE 802.11a, Wi-Fi (802.119), ETSI HiperLAN/2), et WiMAX (IEEE 802,16, ETSI HiperMAN)). Comme Indiqué précédemment, l'invention concerne tout type de réseau sans fil dans lequel la gestion de l'accès radio prend en compte une priorité d'affectation des ressources radio au niveau des équipements qui affectent ces ressources. On notera que le réseau visité et le réseau de domicile peuvent être de type différents,

Par ailleurs, on considère dans ce qui suit, à titre d'exemple nom limitatif, que les terminaux de communication sans fil (MS) des usagers itinérants sont des téléphones mobiles (ou cellulaires). Mais, l'invention n'est pas imitée à ce type de terminal (de communication) sans fil. Elle concerne en effet tout type d'équipement d'usager, non filaire (mobile ou portable ou encore cellulaire), capable d'échanger des données (dans le sens le plus général, et notamment des « data ou de la voix) par voie d'ondes avec d'autres équipements de communication (éventuellement de réseau), et notamment les téléphones fixes, les ordinateurs fixes ou portables, les assistants numériques personnels (ou PDAs), et les récepteurs de contenus (comme par exemple les décodeurs, les passerelles résidentielles (ou « residential gateways» ou les STBs (« Set-Top Boxes »)), dès lors qu'ils sont équipés de moyens de communication.

Comme cela est schématiquement et fonctionnellement illustré sur l'unique figure, un réseau mobile R1 ou R2 comprend au moins un réseau d'accès radio, auquel peuvent se connecter des terminaux (sans fil) d'usagers MS, et un coeur de réseau couplé au réseau d'accès radio.

Pour que l'invention puisse être mise en oeuvre, le coeur de réseau du réseau (mobile) visité R2 doit notamment comporter un serveur de localisation de terminaux d'usagers visiteurs SLV, par exemple de type Ver (pour « Visite Location Register»)), un serveur de localisation de terminaux d'usagers clients SLC2, par exemple de type HLR (pour « Home Location Register»), et un centre de gestion d'appel de visiteurs CV, par exemple de type VMSC (pour «Visited Mobile service Switching Centre » - contraction de VLR/MSC),

Le serveur de localisation de terminaux d'usagers clients SLC2 stocke des données d'informations sur les usagers clients (abonnés) du réseau visité R2, et notamment les adresses de communication et positions connues de ces usagers clients. Il stocke également des données d'informations sur les usagers visiteurs du réseau visité R2 et les envoie au serveur de localisation de terminaux d'usagers visiteurs SLV quand un usager se localise dans le réseau visite R2,

Comme cela est illustré dans l'exemple non limitatif de l'unique figure, le serveur de localisation de terminaux d'usagers clients SLC2 fait généralement partie d'un équipement de réseau HSS2 de type HSS (pour « Home Subscriber Server ») qui centralise toutes les informations de souscription des usagers qui sont clients de son réseau mobile R2.

Le serveur de localisation de terminaux d'usagers visiteurs SLV stocke des données d'informations sur les usagers visiteurs (y compris les itinérants), et notamment les adresses de communication et positions connues de ces usagers visiteurs.

Le centre de gestion d'appels de visiteurs CV est chargé de gérer les commutations de communication (ou d'appel) de son réseau visité R2 vers au moins un autre réseau de communication (notamment R1). Il traite également les procédures de changement de cellule ou handovers, Comme cela est illustré dans l'exemple non limitatif de runique figure, il comprend généralement le serveur de localisation de terminaux d'usagers visiteurs SLV, et est couplé au semeur de localisation de terminaux d'usagers clients SLC2 du réseau visité R2.

L'invention propose d'adjoindre au centre de gestion d'appels de visiteurs CV du réseau visité R2 un module de traitement MT chargé d'intervenir chaque fois qu'est reçue une demande de fourniture (ou d'allocation) de ressources radio du réseau visité R2 relative à un terminal itinérant MS n'appartenant pas au réseau visité R2.

Il est rappelé que l'on entend ici par « demande de fourniture (ou d'allocation) de ressources radio » aussi bien une demande d'établissement d'une communication issue d'un terminal itinérant MS, qu'une demande de transfert inter-cellulaire (ou handover) issue du réseau d'accès du réseau visité R2.

Selon l'invention, lorsque le module de traitement MT reçoit une demande de fourniture (ou d'allocation) de ressources radio de son réseau visité R2, relative à un terminal itinérant MS (rattaché à un réseau de domicile R1), il accède au serveur de localisation de terminaux d'usagers visiteurs SLV de son réseau visité R2 afin de déterminer si il stocke des données qui sont représentatives d'un niveau de priorité, de fourniture de ce terminal itinérant MS.

On entend ici par « terminal itinérant » un terminal MS qui est utilisé par un usager itinérant.

Lorsque des données de priorité sont stockées, c'est qu'elles ont été préalablement transmises par le réseau de domicile R1 de l'usager itinérant, après avoir été extraites de son propre serveur de localisation de terminaux d'usagers cients SLC1 (qui fait éventuellement partie d'un équipement de réseau HSS1 de type HSS, comme illustré), ou bien qu'elles ont été fournies par le coeur de réseau du réseau visité R2 à partir d'informations fournies par le réseau de domicile R1.

Si aucune donnée de priorité n'est stockée dans le serveur de localisation de terminaux d'usagers visiteurs SLV pour le terminal itinérant MS concerné, ou bien si des données de priorité de type dit ordinaire (ou standard ou encore basique) sont stockées dans le serveur de localisation de terminaux d'usagers visiteurs SLV pour le terminal itinérant MS concerné, le module de traitement MT attribue à ce terminât itinérant MS un niveau de priorité choisi qui est supérieur au niveau de priorité dit ordinaire qui existe au sein de son réseau visité R2.

On notera qu'en présence de données de priorité de type ordinaire stockées dans le serveur de localisation de terminaux d'usagers visiteurs SLV pour un terminal itinérant MS, le module de traitement MT peut transformer ces données de priorité stockées en données représentatives d'un niveau de priorité choisi qui est supérieur au niveau de priorité de type ordinaire qui existe au sein de son réseau visité R2.

Une fois que ce niveau de priorité choisi a été attribué au terminal itinérant MS, sa demande de fourniture (de ressources radio) peut alors être traitée par le réseau d'accès radio du réseau visité R2 (auquel le terminal itinérant MS tente d'accéder) en fonction dudit niveau de priorité choisi attribué.

Pour qu'un niveau de priorité choisi puisse être pris en considération par le réseau d'accès radio du réseau visité R2 (par exemple par un contrôleur de réseau radio (ou RNC), dans le cas d'un réseau 3G, ou un contrôleur de station de base (ou BSC), dans le cas d'un réseau 2G), le module de traitement MT peut par exemple transformer ce niveau de priorité en paramètres de type eMLPP (« enhanced Multi Level Precedence and Preemption » - standard 3GPP 22.067).

On notera que le niveau de priorité choisi est certes supérieur au niveau de priorité ordinaire du réseau visité R2, mais il est inférieur au niveau de priorité le plus élevé qui est réservé aux appels ou messages d'urgence, Par ailleurs, le niveau de priorité choisi peut être inférieur ou supérieur au niveau de priorité dit premium du réseau visité R2.

Si le module de traitement MT détermine dans le serveur de localisation de terminaux d'usagers visiteurs SLV des données de priorité de type non ordinaire pour le terminal itinérant MS concerné, alors il demande à son centre de gestion d'appels de visiteurs CV de communiquer ces données stockées au réseau d'accès radio du réseau visité R2 (auquel le terminal itinérant MS tente d'accéder), de sorte traite la demande de fourniture (de ressources radio) en fonction du niveau de priorité qui est défini par ces données stockées,

Le choix du niveau de priorité qui est effectué par le module de traitement MT peut par exemple dépendre du pays où est implanté le réseau de domicile R1 auquel est rattaché le terminal itinérant MS qui fait l'objet d'une demande de fourniture (de ressources radio), compte tenu d'accords d'itinérance passés, Dans ce cas, lorsque le module de traitement MT reçoit une demande de fourniture (de ressources radio) relative, à un terminal itinérant MS, il peut par exemple analyser un premier identifiant qui est associé à ce terminal itinérant MS et qui est représentatif du pays où est implanté son réseau de domicile R1. A titre d'exempte non limitatif, le premier identifiant analysé peut être le MCC (« Mobile Country Code» - indicatif mobile du pays) qui fait partie de l'identifiant d'usager qui est appelé IMSI (« international Mobile Subscriber Identity »).

Si ce premier identifiant désigne un pays qui est différent du pays où est implanté le réseau visité R2, alors le module de traitement MT attribue au terminal itinérant MS un niveau de priorité choisi qui est supérieur à un niveau de priorité ordinaire au sein du réseau visité R2.

On notera que l'on peut également envisager que le module de traitement MT choisisse le niveau de priorité parmi une liste de niveaux de priorité qui sont associés à différents pays. Dans ce cas, le module de traitement MIT choisit le niveau de priorité qui est associé dans la liste au pays qui est désigné par le premier identifiant associé au terminal itinérant MS concerné.

En variante ou en complément, le choix du niveau de priorité qui est effectué par le module de traitement MT peut par exemple dépendre de l'opérateur du réseau de domicile R1 auquel est rattaché le terminal itinérant MS qui fait l'objet d'une demande de fourniture (de ressources radio), compte tenu d'accords d'itinérance passés. Dans ce cas, lorsque le module de traitement MT reçoit une demande de fourniture (de ressources radio) relative à un terminal itinérant MS, il peut par exemple analyser un second identifiant qui est associé à ce terminal itinérant MS et qui est représentatif de l'opérateur de son réseau de domicile R1. A titre d'exemple non limitatif, le second identifiant analysé peut être le MNC (« Mobile Network Code » - indicatif du réseau mobile) qui fait également partie de l'IMSI.

Si ce second identifiant désigne un opérateur qui est différent de l'opérateur du réseau visité R2, alors le module de traitement MT attribue, au terminal itinérant MS un niveau de priorité choisi qui est supérieur à un niveau de priorité ordinaire au sein du réseau visité R2, On notera que l'opérateur du réseau de domicile R1 peut être différent de l'opérateur du réseau visité R2, mais il peut éventuellement appartenir au même pays que ce dernier (cas de l'itinérance nationale).

On notera que l'on peut également envisager que le module de traitement MT choisisse le niveau de priorité parmi une liste de niveaux de priorité qui sont associés à différents opérateurs. Dans ce cas, le module de traitement MT choisit le niveau de priorité qui est associé dans la liste à l'opérateur qui est désigné par le second identifiant associé au terminal itinérant MS concerné.

On comprendra que si le choix du niveau de priorité dépend à la fois du pays et de l'opérateur du réseau de domine R1 auquel est rattaché le terminal itinérant MS qui fait l'objet d'une demande de fourniture (de ressources radio), alors le module de traitement MT choisit un niveau de priorité dans une liste de couples (pays, opérateur), par exemple.

Le module de traitement MT du centre de gestion d'appels VMSC, selon l'invention, est préférentiellement réalisé sous la forme de modules logiciels (ou informatiques), Mais, il peut être également réalisé sous la forme de circuits électroniques ou d'une combinaison de circuits électroniques et de modules logiciels.

Il est important de noter que invention peut être également considérée sous l'angle d'un procédé de fourniture de ressources radio d'un réseau de communication sans fil visité R2 à un terminal itinérant MS, pouvant être notamment mis en oeuvre au moyen d'un centre de gestion d'appels CV présenté ci-avant. Les fonctionnalités offertes par la mise en oeuvre du procédé selon l'invention étant identiques à celles offertes par le centre de gestion d'appels CV présenté ci-avant, seule la combinaison de fonctionnalités principales offerte par le procédé est présentée ci-aprês.

Ce procédé de fourniture de ressources radio consiste, en cas de réception d'une demande de fourniture de ressources radio d'un réseau visité R2, relative à un terminal itinérant MS (d'un usager rattaché à un réseau de communication de domicile R1) :
- à accéder au serveur de localisation de terminaux d'usagers visiteurs SLV du réseau visité R2, afin de déterminer si il stocke des données représentatives d'un niveau de priorité de fourniture pour ce terminal itinérant MS, et
- en l'absence de telles données stockées ou en présence de données stockées représentatives d'un niveau de priorité de fourniture de type ordinaire, à attribuer au terminal itinérant MS un niveau de priorité choisi qui est supérieur à un niveau de priorité ordinaire, afin que sa demande de fourniture soit traitée en fonction de ce niveau de priorité choisi attribué

L'invention ne se limite pas aux modes de réalisation de centre de gestion d'appels et de procédé de fourniture de ressources radio décrits ci-avant, seulement à titre d'exemple, mais elle englobe toutes les variantes que pourra envisager l'homme de l'art dans le cadre des revendications ci-après.

## Revendications

1. Procédé de fourniture de ressources radio d'un réseau de communication sans fil visité (R2), disposant d'un serveur de localisation de terminaux d'usagers visiteurs (SLV), à un terminal de communication itinérant (MS) d'un usager rattaché à un réseau de communication de domicile (R1), **caractérisé en ce qu'**il consiste, en cas de réception d'une demande de fourniture de ressources radio dudit réseau visité (R2) relative audit terminal itinérant (MS), à accéder audit serveur de localisation de terminaux d'usagers visiteurs (SLV) dudit réseau visité (R2) pour déterminer si il stocke des données représentatives d'un niveau de priorité de fourniture pour ledit terminal itinérant (MS), et en l'absence de telles données stockées ou en présence de données stockées représentatives d'un niveau de priorité de fourniture de type ordinaire, à attribuer audit terminal itinérant (MS) un niveau de priorité choisi, supérieur à un niveau de priorité ordinaire, de sorte que sa demande de fourniture soit traitée en fonction dudit niveau de priorité choisi attribué.

2. Procédé selon la revendication 1, **caractérisé en ce qu'**en présence de données attribuées suivant la revendication 1 stockées représentatives d'un niveau de priorité de fourniture de type non ordinaire pour ledit terminal itinérant (MS), on traite ladite demande de fourniture en fonction dudit niveau de priorité défini par lesdites données stockées.

3. Procédé selon l'une des revendications 1 et 2, **caractérisé en ce que** l'on analyse un premier identifiant associé audit terminal itinérant (MS) et représentatif du pays où est implanté son réseau de domicile (R1), et, en l'absence de données stockées représentatives d'un niveau de priorité de fourniture dudit terminal itinérant (MS) ou en présence de données stockées représentatives d'un niveau de priorité de fourniture de type ordinaire, on attribue audit terminal itinérant (MS) un niveau de priorité choisi, supérieur à un niveau de priorité ordinaire, si ledit pays est différent du pays où est implanté ledit réseau visité (R2).

4. Procédé selon la revendication 3, **caractérisé en ce que** l'on choisit ledit niveau de priorité à attribuer en fonction du pays où est implanté le réseau de domicile (R1).

5. Procédé selon l'une des revendications 1 à 4, **caractérisé en ce que** l'on analyse un second identifiant associé audit terminal itinérant (MS) et représentatif de l'opérateur de son réseau de domicile (R1), et en l'absence de données stockées représentatives d'un niveau de priorité de fourniture dudit terminal itinérant (MS) ou en présence de données stockées représentatives d'un niveau de priorité de fourniture de type ordinaire, on attribue audit terminal itinérant (MS) un niveau de priorité choisi, supérieur à un niveau de priorité ordinaire, si ledit opérateur est différent de l'opérateur dudit réseau visité (R2).

6. Procédé selon la revendication 5, **caractérisé en ce que** l'on choisit ledit niveau de priorité à attribuer en fonction de l'opérateur du réseau de domicile (R1).

7. Procédé selon l'une des revendications 1 à 6, **caractérisé en ce que** l'on transforme ledit niveau de priorité attribué en paramètres de type eMLPP destinés au réseau d'accès dudit réseau visité (R2).

8. Centre de gestion d'appels (CV) pour un réseau de communication sans fil visité (R2), disposant d'un serveur de localisation de terminaux d'usagers visiteurs (SLV), **caractérisé en ce qu'**il comprend des moyens de traitement (MT) agencés, en cas de réception d'une demande de fourniture de ressources radio dudit réseau visité (R2) relative à un terminal itinérant (MS) rattaché à un réseau de communication de domicile (R1), pour accéder audit serveur de localisation de terminaux d'usagers visiteurs (SLV) dudit réseau visité (R2) pour déterminer si il stocke des données représentatives d'un niveau de priorité de fourniture pour ledit terminal itinérant (MS), et en l'absence de telles données stockées ou en présence de données stockées représentatives d'un niveau de priorité de fourniture de type ordinaire, pour attribuer audit terminal itinérant (MS) un niveau de priorité choisi, supérieur à un niveau de priorité ordinaire, de sorte que sa demande de fourniture soit traitée en fonction dudit niveau de priorité choisi attribué.

9. Centre de gestion d'appels selon la revendication 8, **caractérisé en ce que** lesdits moyens de traitement (MT) sont agencés, en cas de détermination de données stockées représentatives d'un niveau de priorité de fourniture de type non ordinaire pour ledit terminal itinérant (MS), pour communiquer lesdites données stockées au réseau d'accès radio dudit réseau visité (R2) de sorte qu'il traite ladite demande de fourniture en fonction dudit niveau de priorité défini par lesdites données stockées.

10. Centre de gestion d'appels selon l'une des revendications 8 et 9, **caractérisé en ce que** lesdits moyens de traitement (MT) sont agencés pour analyser un premier identifiant associé audit terminal itinérant (MS) et représentatif du pays où est implanté son réseau de domicile (R1), et, en l'absence de données stockées représentatives d'un niveau de priorité de fourniture dudit terminal itinérant (MS) ou en présence de données stockées représentatives d'un niveau de priorité de fourniture de type ordinaire, pour attribuer audit terminal itinérant (MS) un niveau de priorité choisi, supérieur à un niveau de priorité ordinaire, si ledit pays est différent du pays où est implanté ledit réseau visité (R2).

11. Centre de gestion d'appels selon la revendication 10, **caractérisé en ce que** lesdits moyens de traitement (MT) sont agencés pour choisir ledit niveau de priorité à attribuer en fonction du pays où est implanté le réseau de domicile (R1).

12. Centre de gestion d'appels selon l'une des revendications 8 à 11, **caractérisé en ce que** lesdits moyens de traitement (MT) sont agencés pour analyser un second identifiant associé audit terminal itinérant (MS) et représentatif de l'opérateur de son réseau de domicile (R1), et en l'absence de données stockées représentatives d'un niveau de priorité de fourniture dudit terminal itinérant (MS) ou en présence de données stockées représentatives d'un niveau de priorité de fourniture de type ordinaire, pour attribuer audit terminal itinérant (MS) un niveau de priorité choisi, supérieur à un niveau de priorité ordinaire, si ledit opérateur est différent de l'opérateur dudit réseau visité (R2).

13. Centre de gestion d'appels selon la revendication 12, **caractérisé en ce que** lesdits moyens de traitement (MT) sont agencés pour choisir ledit niveau de priorité à attribuer en fonction de l'opérateur du réseau de domicile (R1).

14. Centre de gestion d'appel selon l'une des revendications 8 à 13, **caractérisé en ce que** lesdits moyens de traitement (MT) sont agencés pour transformer ledit niveau de priorité attribué en paramètres de type eMLPP destinés au réseau d'accès dudit réseau visité (R2).

## Patentansprüche

1. Verfahren zur Bereitstellung von Funkressourcen eines besuchten drahtlosen Kommunikationsnetzwerks (R2), welches über einen Server zur Positionsbestimmung von Endgeräten besuchender Teilnehmer (SLV) verfügt, an ein roamendes Kommunikationsendgerät (MS) eines an ein Heimat-Kommunikationsnetzwerk (R1) gebundenen Teilnehmers, **dadurch gekennzeichnet, dass** es darin besteht, bei Empfang einer Anforderung zur Bereitstellung von Funkressourcen des besagten besuchten Netzwerks (R2) in Bezug auf das besagte roamende Endgerät (MS) auf den besagten Server zur Positionsbestimmung von Endgeräten besuchender Teilnehmer (SLV) des besagten besuchten Netzwerks (R2) zuzugreifen, um zu ermitteln, ob er Daten, die für eine Prioritätsstufe zur Bereitstellung für das besagte roamende Endgerät (MS) repräsentativ sind, speichert, und wenn keine solche gespeicherte Daten vorhanden sind oder gespeicherte Daten vorhanden sind, die für eine normale Bereitstellungs-Prioritätsstufe repräsentativ sind, dem besagten roamenden Endgerät (MS) eine ausgewählte Prioritätsstufe, welche höher als eine normale Prioritätsstufe ist, zuzuordnen, so dass seine Anforderung zur Bereitstellung gemäß der besagten zugeordneten ausgewählten Prioritätsstufe verarbeitet wird.

2. Verfahren nach Anspruch 1, **dadurch gekennzeichnet, dass** bei Vorhandensein von gespeicherten und gemäß Anspruch 1 zugeordneten Daten, welche für eine nicht normale Bereitstellungs-Prioritätsstufe für das besagte roamende Endgerät (MS) repräsentativ sind, die besagte Anforderung zur Bereitstellung gemäß der besagten durch die besagten gespeicherten Daten definierten Prioritätsstufe verarbeitet wird.

3. Verfahren nach einem der Ansprüche 1 und 2, **dadurch gekennzeichnet, dass** man eine erste mit dem besagten roamenden Endgerät (MS) assoziierte Kennung, welche für das Land, in dem sich dessen Heimatnetzwerk (R1) befindet, repräsentativ ist, analysiert, und, wenn keine gespeicherte Daten, die für eine Bereitstellungs-Prioritätsstufe des besagten roamenden Endgeräts (MS) repräsentativ sind, vorhanden sind oder gespeicherte Daten vorhanden sind, die für eine normale Bereitstellungs-Prioritätsstufe repräsentativ sind, man dem besagten roamenden Endgerät (MS) eine ausgewählte Prioritätsstufe, welche höher als eine normale Prioritätsstufe ist, zuordnet, wenn sich das besagte Land von dem Land, in welchem sich das besagte besuchte Netzwerk (R2) befindet, unterscheidet.

4. Verfahren nach Anspruch 3, **dadurch gekennzeichnet, dass** man die besagte zuzuordnende Prioritätsstufe in Abhängigkeit von dem Land, in welchem sich das Heimatnetzwerk (R1) befindet, auswählt.

5. Verfahren nach einem der Ansprüche 1 bis 4, **dadurch gekennzeichnet, dass** man eine zweite mit dem besagten roamenden Endgerät (MS) assoziierte Kennung, welche für den Betreiber seines Heimatnetzwerks (R1) repräsentativ ist, analysiert und, wenn keine gespeicherte Daten, die für eine Bereitstellungs-Prioritätsstufe des besagten roamenden Endgeräts (MS) repräsentativ sind, vorhanden sind oder gespeicherte Daten vorhanden sind, die für eine normale Bereitstellungs-Prioritätsstufe repräsentativ sind, man dem besagten roamenden Endgerät (MS) eine ausgewählte Prioritätsstufe, welche höher als eine normale Prioritätsstufe ist, zuordnet, wenn sich der besagte Betreiber von dem Betreiber des besagten besuchten Netzwerks (R2) unterscheidet.

6. Verfahren nach Anspruch 5, **dadurch gekennzeichnet, dass** man die besagte zuzuordnende Prioritätsstufe in Abhängigkeit von dem Betreiber des Heimatnetzwerks (R1) auswählt.

7. Verfahren nach einem der Ansprüche 1 bis 6, **dadurch gekennzeichnet, dass** man die besagte zugeordnete Prioritätsstufe in für das Zugangsnetzwerk des besagten besuchten Netzwerks (R2) bestimmte Parameter vom Typ eMLPP umwandelt.

8. Anrufsteuerungszentrale (CV) für ein besuchtes drahtloses Kommunikationsnetzwerks (R2), welches über einen Server zur Positionsbestimmung von Endgeräten besuchender Teilnehmer (SLV) verfügt, **dadurch gekennzeichnet, dass** es Verarbeitungsmittel (MT) umfasst, welche dazu ausgelegt sind, bei Empfang einer Anforderung zur Bereitstellung von Funkressourcen des besagten besuchten Netzwerks (R2) in Bezug auf das besagte roamende Endgerät (MS), welches an ein Heimat-Kommunikationsnetzwerk (R1) gebunden ist, auf den besagten Server zur Positionsbestimmung von Endgeräten besuchender Teilnehmer (SLV) des besagten besuchten Netzwerks (R2) zuzugreifen, um zu ermitteln, ob er Daten, die für eine Prioritätsstufe zur Bereitstellung für das besagte roamende Endgerät (MS) repräsentativ sind, speichert, und wenn keine solche gespeicherte Daten vorhanden sind oder gespeicherte Daten vorhanden sind, die für eine normale Bereitstellungs-Prioritätsstufe repräsentativ sind, dem besagten roamenden Endgerät (MS) eine ausgewählte Prioritätsstufe, welche höher als eine normale Prioritätsstufe ist, zuzuordnen, so dass seine Anforderung zur Bereitstellung gemäß der besagten zugeordneten ausgewählten Prioritätsstufe verarbeitet wird.

9. Anrufsteuerungszentrale nach Anspruch 8, **dadurch gekennzeichnet, dass** die besagten Verarbeitungsmittel (MT) dazu ausgelegt sind, bei Ermittlung von gespeicherten Daten, welche für eine nicht normale Bereitstellungs-Prioritätsstufe für das besagte roamende Endgerät (MS) repräsentativ sind, die besagten gespeicherten Daten an das Funkzugangsnetzwerk des besagten besuchten Netzwerks (R2) zu übermitteln, damit es die besagte Anforderung zur Bereitstellung gemäß der besagten durch die besagten gespeicherten Daten definierten Prioritätsstufe verarbeitet.

10. Anrufsteuerungszentrale nach einem der Ansprüche 8 und 9, **dadurch gekennzeichnet, dass** die besagten Verarbeitungsmittel (MT) dazu ausgelegt sind, eine erste mit dem besagten roamenden Endgerät (MS) assoziierte Kennung, welche für das Land, in dem sich dessen Heimatnetzwerk (R1) befindet, repräsentativ ist, zu analysieren, und, wenn keine gespeicherte Daten, die für eine Bereitstellungs-Prioritätsstufe des besagten roamenden Endgeräts (MS) repräsentativ sind, vorhanden sind oder gespeicherte Daten vorhanden sind, die für eine normale Bereitstellungs-Prioritätsstufe repräsentativ sind, dem besagten roamenden Endgerät (MS) eine ausgewählte Prioritätsstufe, welche höher als eine normale Prioritätsstufe ist, zuzuordnen, wenn sich das besagte Land von dem Land, in welchem sich das besagte besuchte Netzwerk (R2) befindet, unterscheidet.

11. Anrufsteuerungszentrale nach Anspruch 10, **dadurch gekennzeichnet, dass** die besagten Verarbeitungsmittel (MT) dazu ausgelegt sind, die besagte zuzuordnende Prioritätsstufe in Abhängigkeit von dem Land, in welchem sich das Heimatnetzwerk (R1) befindet, auszuwählen.

12. Anrufsteuerungszentrale nach einem der Ansprüche 8 bis 11, **dadurch gekennzeichnet, dass** die besagten Verarbeitungsmittel (MT) dazu ausgelegt sind, eine zweite mit dem besagten roamenden Endgerät (MS) assoziierte Kennung, welche für den Betreiber seines Heimatnetzwerks (R1) repräsentativ ist, zu analysieren und, wenn keine gespeicherte Daten, die für eine Bereitstellungs-Prioritätsstufe des besagten roamenden Endgeräts (MS) repräsentativ sind, vorhanden sind oder gespeicherte Daten vorhanden sind, die für eine normale Bereitstellungs-Prioritätsstufe repräsentativ sind, dem besagten roamenden Endgerät (MS) eine ausgewählte Prioritätsstufe, welche höher als eine normale Prioritätsstufe ist, zuzuordnen, wenn sich der besagte Betreiber von dem Betreiber des besagten besuchten Netzwerks (R2) unterscheidet.

13. Anrufsteuerungszentrale nach Anspruch 12, **dadurch gekennzeichnet, dass** die besagten Verarbeitungsmittel (MT) dazu ausgelegt sind, die besagte zuzuordnende Prioritätsstufe in Abhängigkeit von dem Betreiber des Heimatnetzwerks (R1) auszuwählen.

14. Anrufsteuerungszentrale nach einem der Ansprüche 8 bis 13, **dadurch gekennzeichnet, dass** die besagten Verarbeitungsmittel (MT) dazu ausgelegt sind, die besagte zugeordnete Prioritätsstufe in für das Zugangsnetzwerk des besagten besuchten Netzwerks (R2) bestimmte Parameter vom Typ eMLPP umzuwandeln.

## Claims

1. A method for providing radio resources of a visited wireless communication network (R2), having a visiting user terminal location server (SLV), to a roaming communication terminal (MS) of a user assigned to a home communication network (R1), **characterized in that** it consists, when a request to provision radio resources of said visited network (R2) relating to said roaming terminal (MS) is received, of accessing said visiting user terminal location server (SLV) of said visited network (R2) in order to determine whether it is storing data representative of a provision priority level for said roaming terminal (MS), and in the absence of such stored data or in the presence of stored data representative of an ordinary provision priority level, of assigning to said roaming terminal (MS) a chosen priority level greater than an ordinary priority level, such that its provision request is processed based on said assigned chosen priority level.

2. A method according to claim 1, characterized that in the presence of stored data assigned according to claim 1 representative of a non-ordinary provision priority level for said roaming terminal (MS), said provision request is processed based on said priority level defined by said stored data.

3. A method according to one of the claims 1 and 2, **characterized in that** a first identifier is analyzed that is associated with said roaming terminal (MS) and representative of the country where its home network (R1) is located, and in the absence of stored data representative of a provision priority level of said roaming terminal (MS), or in the presence of stored data representative of an ordinary provision priority level, a chosen priority level is assigned to said roaming terminal (MS) that is greater than an ordinary priority level, if said country is different from the country where said visited network (R2) is located.

4. A method according to claim 3, **characterized in that** said priority level to be assigned is chosen based on the country where the home network (R1) is located.

5. A method according to one of the claims 1 to 4, **characterized in that** a second identifier is analyzed that is associated with said roaming terminal (MS) and representative of the operator of its home network (R1), and in the absence of stored data representative of a provision priority level of said roaming terminal (MS), or in the presence of stored data representative of an ordinary provision priority level, a chosen priority level is assigned to said roaming terminal (MS) that is greater than an ordinary priority level, if said operator is different from the operator of said visited network (R2).

6. A method according to claim 5, **characterized in that** said priority level to be assigned is chosen based on the operator of the home network (R1).

7. A method according to one of the claims 1 to 6, **characterized in that** said assigned priority level is converted into eMLPP parameters intended for the access network of said visited network (R2).

8. A call management centre (CV) for a visited wireless communication network (R2), having a visiting user terminal location server (SLV), to a roaming communication terminal (MS) of a user assigned to a home communication network (R1), **characterized in that** it comprises means for processing (MT) arranged, when a request to provision radio resources of said visited network (R2) relating to said roaming terminal (MS) is received, to access said visiting user terminal location server (SLV) of said visited network (R2) to determine whether it is storing data representative of a provision priority level for said roaming terminal (MS), and in the absence of such stored data or in the presence of stored data representative of an ordinary provision priority level, to assign to said roaming terminal (MS) a chosen priority level greater than an ordinary priority level, such that its provision request e is processed based on said assigned chosen priority level.

9. A call management centre according to claim 8, **characterized in that** said processing means (MT) are arranged, in the event that it is determined that there is stored data representative of a non-ordinary provision priority level for said roaming terminal (MS), to communicate said stored data to said radio access network of said visited network (R2) so that it will process said provision request based on said priority level defined by said stored data.

10. A call management centre according to one of the claims 8 and 9, **characterized in that** said processing means (MT) are arranged to analyze a first identifier associated with said roaming terminal (MS) and representative of the country where its home network (R1) is located, and in the absence of stored data representative of a provision priority level of said roaming terminal (MS), or in the presence of stored data representative of an ordinary provision priority level, to assign a chosen priority level to said roaming terminal (MS) that is greater than an ordinary priority level, if said country is different from the country where said visited network (R2) is located.

11. A call management centre according to claim 10, **characterized in that** said processing means (MT) are arranged to choose said priority level to be assigned based on the country where the home network (R1) is located.

12. A call management centre according to one of the claims 8 to 11, **characterized in that** said processing means (MT) are arranged to analyze a second identifier associated with said roaming terminal (MS) and representative of the operator of its home network (R1), and in the absence of stored data representative of a provision priority level of said roaming terminal (MS), or in the presence of stored data representative of an ordinary provision priority level, to assign a chosen priority level to said roaming terminal (MS) that is greater than an ordinary priority level, if said operator is different from the operator of said visited network (R2).

13. A call management centre according to claim 12, **characterized in that** said processing means (MT) are arranged to choose said priority level to be assigned based on the operator of the home network (R1).

14. A call management centre according to one of the claims 8 to 13, **characterized in that** said processing means (MT) are arranged to convert said assigned priority level into eMLPP parameters intended for the access network of said visited network (R2).
